# EUROPÄISCHE PATENTANMELDUNG

(11) **EP 3 650 988 A1**
(43) Veröffentlichungstag der Anmeldung: **13.05.2020**
(21) Anmeldenummer: 18205327.2
(22) Anmeldetag: 09.11.2018
(51) Int. Cl.: G06F 3/01, G06F 3/0346

(54) **EINGABEVORRICHTUNG UND VERFAHREN ZUR EINGABE VON INFORMATIONEN SOWIE VERFAHREN ZUR ERZEUGUNG EINES VIRTUELLEN ZEIGERS**

(71) Anmelder: iXperienz GmbH & Co. KG, 22761 Hamburg (DE)
(72) Erfinder: Brennecke, Benjamin, 27386 Hemslingen (DE)
(74) Vertreter: Klickow & Wetzel PartGmbB

(57) **Zusammenfassung**

Die Erfindung betrifft eine Eingabevorrichtung für Augmented-Reality- und Virtual-Reality-Anwendungen, im Sinne eines Eingabegerätes, mit dem Benutzereingaben erfassbar und an eine Rechnereinheit übertragbar sind, und ein Verfahren zur Eingabe von Informationen für Augmented-Reality- und Virtual-Reality-Anwendungen sowie ein Verfahren zur Erzeugung eines virtuellen Zeigers in einer AR-Anwendung. Erfindungsgemäß weist die Eingabevorrichtung zumindest zwei mehrfarbige Leuchtelemente auf, sodass zusätzlich zur Modulation der Leuchtstärke der Leuchtelemente die Leuchtfarbe zur Kodierung und Übertragung von Daten verwendbar ist.

## Beschreibung

Die Erfindung betrifft eine Eingabevorrichtung für Augmented-Reality- und Virtual-Reality-Anwendungen, im Sinne eines Eingabegerätes, mit dem Benutzereingaben erfassbar und an eine Rechnereinheit eines Augmented-Reality- oder eines Virtual-Reality-Systems übertragbar sind.

Darüber hinaus betrifft die Erfindung ein Verfahren zur Eingabe von Informationen für Augmented-Reality- und Virtual-Reality-Anwendungen.

Weiterhin betrifft die Erfindung ein Verfahren zur Erzeugung eines virtuellen Zeigers in einer Augmented-Reality- oder Virtual-Reality-Anwendung.

Die voranschreitende Digitalisierung nahezu sämtlicher Geschäftsbereiche und der einhergehenden Prozesse bietet zunehmend neue Anwendungsgebiete für die Technologie der erweiterten Realität (Augmented Reality / AR).

Mithilfe von AR-Systemen ist die einen Benutzer umgebende Wirklichkeit erweiterbar, indem zusätzliche virtuelle Inhalte in das Blickfeld des Benutzers projiziert werden. Dies ist in den bekannten AR-Systemen in der Regel durch als AR-Brillen ausgebildete AR-Geräte realisiert, durch die virtuelle Objekte bzw. Bilder mithilfe zumindest einer Projektionseinrichtung in einen Projektionsbereich im Blickfeld des Benutzers projizierbar sind. Der Projektionsbereich liegt für gewöhnlich innerhalb zumindest eines der Brillengläser eines als eine AR-Brille ausgebildeten AR-Gerätes.

Eine AR-Umgebung wird somit durch die Überlagerung von einer realen Umgebung und mindestens einem projizierten, virtuellen Bild erzeugt.

Sollen die virtuell hinzugefügten Inhalte mit den realen Objekten der erweiterten Wirklichkeit verknüpfbar sein, muss die reale Umgebung zumindest in Teilbereichen des Blickfeldes des Benutzers durch das AR-System erfassbar sein.

Zur Erfassung der realen Umgebung des Benutzers weisen AR-Systeme in der Regel mindestens eine optische Erfassungseinheit, wie beispielsweise eine Kamera, auf. Die optische Erfassungseinheit ist häufig als ein Teil eines AR-Gerätes ausgebildet.

Soll in einer AR-Anwendung in einer mithilfe eines AR-Systems für mindestens einen Benutzer erzeugten AR-Umgebung eine Interaktion des Benutzers mit virtuellen Elementen der AR-Umgebung ermöglicht werden, so müssen geeignete Eingabesysteme und Eingabeschnittstellen bereitgestellt werden.

Bekannte AR-Systeme weisen beispielsweise eine AR-Brille und mindestens ein der AR-Brille zugeordnetes Eingabegerät auf. Mithilfe bekannter Eingabegeräte ist beispielsweise das Drücken von Tasten, die Bewegung eines Joysticks oder die Beschleunigungswerte des Eingabegerätes entlang definierter Achsen über geeignete Sensoren erfassbar. Zur Übertragung der erfassten Sensordaten an die AR-Brille sind sowohl kabelgebundene als auch kabellose Datenübertragungskanäle, wie beispielsweise Bluetooth oder WLAN, bekannt.

Darüber hinaus sind durch die Verwendung der zumindest einen optischen Erfassungseinheit eines AR-Systems die aktuelle Position des Eingabegerätes in der den Benutzer umgebenden Wirklichkeit sowie gegebenenfalls über eine optische Schnittstelle der Eingabevorrichtung gesendete Daten erfassbar.

In der DE 101 24 834 C2 sind ein Verfahren für eine Mensch-Maschine-Schnittstelle zur Informationseingabe sowie ein als ein Stift ausgebildetes Eingabegerät zur Durchführung des Verfahrens offenbart. Der Stift weist für eine Nutzung als ein Zeigegerät entsprechend einer Computermaus in einer AR-Umgebung Tasten auf. Weiterhin weist der Stift mindestens ein Leuchtelement auf, über das die Position des Stiftes mithilfe der optischen Erfassungseinheit eines AR-Gerätes erfassbar ist. Darüber hinaus ist ein Leuchtelement des Stiftes derart ausgebildet und ansteuerbar, dass mithilfe des Leuchtelementes eine Datenübertragungsschnittstelle realisiert ist. Über diese Datenübertragungsschnittstelle sind Daten versendbar, indem Daten kodiert werden und das von dem Leuchtelement emittierte Licht entsprechend moduliert wird.

Ausgewählte Vorteile einer optischen Datenübertragung zwischen einem Eingabegerät und einem AR-Gerät sind, dass das Eingabegerät nicht zwangsläufig die für eine kabellose Kommunikation, beispielsweise mithilfe von Bluetooth oder WLAN, erforderliche Hard- und Software aufweisen muss, dass nicht zwangsläufig eine Kopplung eines Eingabegerätes mit einem AR-System erfolgen muss, bevor Informationen von dem Eingabegerät an das AR-System übertragbar sind und dass mithilfe eines einzigen Eingabegerätes einfach und gleichzeitig Daten an mehrere AR-Geräte eines AR-Systems übermittelbar sind.

Eine Datenübertragungsschnittstelle im nachfolgend verwendeten Sinne ist definiert als technische Umsetzung eines Informationsaustausches zwischen mindestens zwei Teilnehmern. Der Informationsaustausch kann sowohl unidirektional als auch bidirektional realisiert sein.

Eine Datenübertragungsschnittstelle ist gekennzeichnet durch ihre Datenübertragungsrate, das heißt die Menge an Daten, die in einem definierten Zeitabschnitt übertragbar ist. Eine Angabe der Datenübertragungsrate einer Datenübertragungsschnittstelle erfolgt für gewöhnlich in Bit / s.

Eine Datenübertragungsschnittstelle weist zumindest einen Datenübertragungskanal auf. Über einen einzigen Datenübertragungskanal kann eine serielle Datenübertragung, über mehrere Datenübertragungskanäle eine parallele Datenübertragung realisiert werden.

Die Datenübertragungsrate einer optischen Datenübertragungsschnittstelle bestimmt sich aus der Sendefrequenz eines einzelnen Kanals, aus der Anzahl der verschiedenen übertragbaren Symbole, die auf einem Kanal abbildbar sind, und durch die Anzahl der parallel nutzbaren Kanäle.

Ein Symbol ist die kleinste übertragbare Größe und kann je nach Ausführungsform ein oder mehrere Bits umfassen. Im einfachsten Fall liegt eine binäre Datenübertragungsschnittstelle vor, in der die Symbole "0" und "1" realisiert sind. Im Falle einer optischen Datenübertragung auf einem Kanal könnte dies beispielsweise durch ein Einschalten des Leuchtelementes zur Übertragung einer "1" und durch ein Ausschalten des Leuchtelementes zur Übertragung einer "0" jeweils für die Sendedauer T eines Symbols erfolgen.

Die Sendefrequenz f ist gegeben durch das Inverse der Sendedauer T eines einzigen Symbols.

Neben dem Sender kann die maximal mit einer Datenübertragungsschnittstelle realisierbare Datenübertragungsrate auch durch den Empfänger begrenzt sein.

Bekannte Eingabevorrichtung mit optischer Datenübertragungsschnittstelle für AR-Systeme verwenden ein oder mehrere Leuchtelemente mit einem jeweils emittierten Licht etwa einer Wellenlänge bzw. etwa einer Leuchtfarbe je Vorrichtung. Die Modulation des zur Übertragung von Daten eingesetzten Lichtes beschränkt sich somit auf die Leuchtstärke.

Bei der Verwendung nur einer Farbe des emittierten Lichtes besteht ein erhöhtes Risiko, dass das emittierte Lichtsignal bei einem Hintergrund ähnlicher Farbe nicht erkannt wird. Darüber hinaus ist es für eine Unterscheidung zweier gleichfarbiger Lichtquellen, die dicht beieinander liegen, eine erhöhte Auflösung einer optischen Erfassungseinheit und ein erhöhter Datenverarbeitungsaufwand erforderlich. Weiterhin beschränkt die Verwendung einer Leuchtfarbe für einen Kanal die Anzahl der darstellbaren Symbole und somit auch die Übertragungsrate der Datenübertragung.

Eine Aufgabe der Erfindung ist es daher, eine Eingabevorrichtung für AR-Anwendungen anzugeben, die eine optische Datenübertragung sowohl mit einer hohen Datenübertragungsrate als auch mit einer verbesserten Erfassbarkeit der Leuchtsignale realisiert.

Diese Aufgabe wird erfindungsgemäß dadurch gelöst, dass die optische Datenübertragungsschnittstelle der Eingabevorrichtung mindestens zwei Leuchtelemente aufweist, die sowohl in ihrer Leuchtstärke als auch in ihrer Leuchtfarbe modulierbar sind.

Eine weitere Aufgabe der Erfindung ist es, ein Verfahren zur Eingabe von Informationen für eine AR-Anwendung anzugeben, das eine optische Datenübertragung sowohl mit einer hohen Datenübertragungsrate als auch mit einer verbesserten Erfassbarkeit der Leuchtsignale realisiert.

Diese Aufgabe wird erfindungsgemäß dadurch gelöst, dass eine zu übertragende Information in einer Kodiereinheit eines Eingabegerätes in ein optisches Signal zur parallelen Übertragung über zumindest zwei Kanäle umgesetzt wird, wobei die Modulation des auf jedem der Kanäle gesendeten Lichtes sowohl durch eine Leuchtstärken- als auch durch eine Leuchtfarbenmodulation realisiert ist.

Eine weitere Aufgabe der Erfindung ist es, ein Verfahren zur Erzeugung eines virtuellen Zeigers für eine AR-Anwendung anzugeben, dass eine isomorphe Abbildung eines virtuellen Zeigers in einer AR-Umgebung basierend auf der Position einer Eingabevorrichtung ermöglicht.

Diese Aufgabe wird erfindungsgemäß dadurch gelöst, dass das AR-Gerät kalibriert wird, sodass im laufenden Betrieb eine isomorphe Abbildung des virtuellen Zeigers anhand der mit der optischen Erfassungseinheit erfassten Bildern ohne eine Kompensation einer eventuellen Eigenbewegung der optischen Erfassungseinheit in Relation zu der Eingabevorrichtung ermöglicht ist.

Eine erfindungsgemäße Eingabevorrichtung für Augmented-Reality-Anwendungen weist einen Grundkörper und zumindest zwei Leuchtelemente auf. Die Leuchtelemente sind in einer vorteilhaften Ausführungsform der Erfindung in einem oberen Bereich des Grundkörpers der Eingabevorrichtung angeordnet, sodass die Eingabevorrichtung in der Hand eines Benutzers haltbar ist, ohne dass Leuchtelemente durch die Hand des Benutzers verdeckt sind.

Der Grundkörper der Eingabevorrichtung weist in einer vorteilhaften Ausführungsform der Erfindung eine Form und/oder eine Farbe auf, die mithilfe einer kamerabasierten Bilderfassung und anschließender digitaler Auswertung eine erhöhte Erkennbarkeit vor einem Hintergrund ermöglicht.

Mithilfe der Leuchtelemente ist in einer erfindungsgemäßen Ausführungsform einer Eingabevorrichtung verschiedenfarbiges Licht unabhängig voneinander abstrahlbar. So ist beispielsweise zu einem Zeitpunkt t1 mithilfe eines ersten Leuchtelementes ein rotes Licht abstrahlbar, während mithilfe eines zweiten Leuchtelementes ein blaues Licht abstrahlbar ist und mit einem weiteren dritten Leuchtelement kein Licht abgestrahlt wird.

Die Farbe des mithilfe eines Leuchtelementes emittierten Lichtes ist dabei durch den jeweils zugehörigen Spektralbereich des insgesamt von einem Leuchtmittel emittierten Lichtes zu einem Zeitpunkt definiert. Es sind ausdrücklich auch für den Menschen unsichtbare Spektralbereiche wie Infrarot oder Ultraviolett in der erfindungsgemäßen Lehre eingeschlossen. Weiterhin sind auch Mischfarben, die durch die Kombination von Licht verschiedener Wellenlängen bzw. Wellenlängenbereiche entstehen, insbesondere weißes Licht, inbegriffen.

Die Eigenschaft verschiedenfarbiges Licht abzustrahlen bedeutet im Zusammenhang mit dieser Erfindung, dass mit jedem der Leuchtelemente Licht mindestens zwei verschiedener Farben in einer Sequenz nacheinander abstrahlbar ist.

Jedes der Leuchtelemente weist in einer vorteilhaften Ausführungsform mindestens ein Leuchtmittel auf. Das mindestens eine Leuchtmittel ist vorteilhaft als eine Leuchtdiode, besonders vorteilhaft als eine Mehrfarben-Leuchtdiode, beispielsweise eine RGB- oder eine RGBW-LED, ausgebildet.

Der Farbe Rot ist dabei in einer vorteilhaften Ausführungsform der Erfindung ein Wellenlängenbereich von etwa 640 nm bis 780 nm, der Farbe Grün ein Wellenlängenbereich zwischen 490 nm und 570 nm und der Farbe Blau ein Wellenlängenbereich zwischen 430 nm und 490 nm zugeordnet.

In einer weiteren vorteilhaften Ausführungsform der Erfindung weist jedes der Leuchtelemente zusätzlich zu dem mindestens einen Leuchtmittel einen Abstrahlkörper auf. Das durch zumindest ein Leuchtmittel emittierte Licht wird durch den jeweiligen Abstrahlkörper hindurchgeleitet und von diesem an die Umgebung abgestrahlt.

Darüber hinaus weist eine erfindungsgemäße Eingabevorrichtung für Augmented-Reality-Anwendungen zumindest ein Eingabeelement auf, das beispielsweise als ein Taster oder als ein Scroll-Rad ausgebildet ist. Eine Betätigung des mindestens einen Eingabeelementes durch einen Benutzer ist durch die Eingabevorrichtung mithilfe geeigneter Sensorik und Datenverarbeitungseinrichtungen erfassbar.

Zumindest eines der Leuchtelemente realisiert ein Positionsleuchtelement, das in einem eingeschalteten Zustand der Eingabevorrichtung kontinuierlich ein konstantes oder ein moduliertes Licht abstrahlt. In einer vorteilhaften Ausführungsform der Erfindung ist das Positionsleuchtelement durch das oberste Leuchtelement der Eingabevorrichtung realisiert.

Das Leuchten des Positionsleuchtelementes ist mithilfe zumindest einer optischen Erfassungseinheit eines AR-Systems bzw. eines AR-Gerätes erfassbar, sodass mithilfe einer geeigneten Rechnereinrichtung bzw. Auswerteeinheit die Position des Positionsleuchtelementes und damit des oberen Endes der Eingabevorrichtung in der realen Umgebung bestimmbar ist. Voraussetzung für die Erfassbarkeit der Position der Eingabevorrichtung ist somit, dass sich zumindest das mindestens eine Positionsleuchtelement im Erfassungsbereich der optischen Erfassungseinheit des AR-Systems befindet.

Zumindest eines der Leuchtelemente realisiert darüber hinaus zumindest einen Teil einer als ein Sender ausgebildeten optischen Datenübertragungsschnittstelle der Eingabevorrichtung. Jedes der Datenübertragungsschnittstelle zugeordnete Leuchtelement realisiert dabei einen Datenübertragungskanal.

Zur Übertragung von Daten über die optische Datenübertragungsschnittstelle der Eingabevorrichtung weist die Eingabevorrichtung eine Kodiereinheit auf, mit der digitale Daten entsprechend einer Kodiervorschrift in ein Leuchtmuster kodierbar sind. Das Leuchtmuster ist durch eine entsprechende Ansteuerung der der optischen Datenübertragungsschnittstelle zugeordneten Leuchtelemente abstrahlbar bzw. versendbar.

In einer vorteilhaften Ausführungsform der Erfindung sind definierten Bitfolgen der digitalen Daten individuelle Symbole zugeordnet, die mit den der optischen Datenübertragungsschnittstelle zugeordneten Leuchtelementen der Eingabevorrichtung allein oder insgesamt darstellbar sind.

In einer erfindungsgemäßen Ausführungsform der Eingabevorrichtung, ist ein Symbol durch die Leuchtstärke und die Leuchtfarbe aller der Datenübertragungsschnittstelle zugeordneten Leuchtelemente der Eingabevorrichtung zu einem Zeitpunkt t realisiert.

In einer besonders vorteilhaften Ausführungsform der Erfindung weist die Eingabevorrichtung mindestens drei Leuchtelemente auf.

In einer weiteren vorteilhaften Ausführungsform der Erfindung ist das am nächsten zu der Spitze bzw. dem oberen Ende der Eingabevorrichtung angeordnete Leuchtelement der mindestens drei Leuchtelemente als das Positionsleuchtelement ausgebildet. Die weiteren mindestens zwei Leuchtelemente sind als Datenübertragungsleuchtelemente ausgebildet und somit der Datenübertragungsschnittstelle zugeordnet.

In einer weiteren erfindungsgemäßen Ausführungsform einer Eingabevorrichtung weist die Eingabevorrichtung mindestens drei Leuchtelemente auf, von denen das am nächsten zu der Spitze bzw. dem oberen Ende der Eingabevorrichtung angeordnete Leuchtelement als das Positionsleuchtelement ausgebildet ist. Die weiteren mindestens zwei Leuchtelemente sind als Datenübertragungsleuchtelemente ausgebildet. Das Positionsleuchtelement ist im Falle einer Datenübertragung neben den mindestens zwei Datenübertragungsleuchtelementen als ein weiteres Leuchtelement zur Datenübertragung einsetzbar und somit der Datenübertragungsschnittstelle zugeordnet. Ist eine Datenübertragung abgeschlossen, so fungiert das Positionsleuchtelement wieder in seiner Grundfunktion.

In einer weiteren vorteilhaften Ausführungsform der Erfindung sind die beiden oberen Leuchtelemente als Positionsleuchtelemente ausgebildet, die zur verbesserten Erfassbarkeit und Identifizierbarkeit durch ein AR-Gerät zumindest auch in einem Zustand ohne Datenübertragung Licht abstrahlen.

In einer besonders vorteilhaften Ausführungsform der Erfindung leuchten diese beiden Positionsleuchtelemente in voneinander verschiedenen Farben, sodass diese zumindest in Kombination regelmäßig von einem Hintergrund unterscheidbar sind.

In einer besonders vorteilhaften Ausführungsform der erfindungsgemäßen Eingabevorrichtung weist diese genau fünf Leuchtelemente auf. Dies basiert auf einer handlichen Dimensionierung der Eingabevorrichtung in Verbindung mit einer auf eine hohe Präzision der Erfassbarkeit und Erkennbarkeit der individuellen Zustände der Leuchtelemente durch ein AR-Gerät mithilfe einer optischen Erfassungseinheit ausgelegten Anordnung und Dimensionierung der Leuchtelemente.

Für eine verbesserte Erkennbarkeit der gesamten Leuchtelemente einer erfindungsgemäßen Eingabevorrichtung sind in einer vorteilhaften Ausführungsform der Eingabevorrichtung die beiden äußeren Leuchtelemente, abgesehen von einem eventuellen Farbwechsel, stets eingeschaltet, sodass der zur Erfassung der gesendeten Daten auszuwertende Bildbereich leichter lokalisierbar ist.

Ein erfindungsgemäßes Verfahren zur Eingabe von Informationen in einer AR-Anwendung verwendet eine Eingabevorrichtung.

Bei den in der AR-Anwendung einzugebenden Informationen handelt es sich insbesondere um die Position der Eingabevorrichtung in einer realen Umgebung, sowie um Zustandsinformationen der Eingabeelemente, wie beispielsweise zur Erkennung eines Tastendruckes oder der Bewegung eines Scroll-Rades, insbesondere um eine Interaktion eines Benutzers mit virtuellen Elementen der AR-Anwendung bzw. in der AR-Umgebung zu ermöglichen.

Die Information bezüglich der Position der Eingabevorrichtung in der Umgebung wird durch ein Leuchten des mindestens einen Positionsleuchtelementes übermittelt. Alle weiteren Informationen werden ausgehend von einer die jeweilige Information enthaltenen Bitfolge mithilfe einer Kodiereinheit in ein Leuchtmuster kodiert. Dieses Leuchtmuster wird durch eine entsprechende Ansteuerung der der Datenübertragungsschnittstelle zugeordnete Leuchtelemente von der Eingabevorrichtung versendet.

Mithilfe der optischen Erfassungseinheit eines AR-Systems wird die im Erfassungsbereich der optischen Erfassungseinheit liegende Umgebung mit einer definierten Frequenz erfasst, sodass jeweils ein Bild der in dem Erfassungsbereich liegenden realen Umgebung zu einem Zeitpunkt erfasst wird. Die Anzahl der erfassten Bilder pro Sekunde ist als Framerate der optischen Erfassungseinheit definiert.

Die erfassten Bilddaten werden in einer bevorzugten Implementierung des Verfahrens an eine Auswerteeinheit des AR-Systems übergeben, die die Bilddaten anhand vorgegebener Merkmale nach der Eingabevorrichtung und/oder relevanten Teilen der Eingabevorrichtung durchsucht. Diese Merkmale können erfindungsgemäß beispielsweise durch die Form bzw. Kontur des Eingabevorrichtung und/oder die Anzahl der Leuchtelemente der Eingabevorrichtung und/oder die Anordnung der Leuchtelemente der Eingabevorrichtung gegeben sein. Ist die Eingabevorrichtung innerhalb des Erfassungsbereiches der optischen Erfassungseinheit positioniert, so wird die Position der Eingabevorrichtung zumindest anhand des mindestens einen Positionsleuchtelementes bestimmt. Darüber hinaus werden die jeweiligen Positionen und Zustände der der Datenübertragungsschnittstelle zugeordneten Leuchtelemente erfasst und mithilfe einer Dekodiereinheit dekodiert, sodass die von der Eingabevorrichtung versendete Bitfolge verarbeitbar ist.

Eine Bitfolge bzw. eine Information kann dabei sowohl über ein einziges Symbol im Sinne eines Leuchtmusters zu einem Zeitpunkt t oder über eine Symbolfolge übermittelt werden.

Die Framerate der optischen Erfassungseinheit des AR-Systems, im Sinne der je Sekunde erfassbaren Bilder, ist vorteilhaft mindestens zweimal größer als die Sendefrequenz der optischen Datenübertragungsschnittstelle der Eingabevorrichtung.

Ein erfindungsgemäßes Verfahren zur Eingabe von Informationen in einer AR-Anwendung umfasst somit zumindest die folgenden Schritte:
1. Erzeugung einer Information mithilfe der Eingabevorrichtung / Laden einer Information aus einem Speicher einer Eingabevorrichtung
2. Kodierung der Information mithilfe einer Kodiereinheit der Eingabevorrichtung in mindestens ein Symbol
3. Ansteuerung der Leuchtelemente der Datenübertragungsschnittstelle der Eingabevorrichtung zur Abstrahlung des mindestens einen Symbols in Form eines Farbmusters bzw. Leuchtmusters oder einer Folge von Farbmustern bzw. Leuchtmustern

Auf der mindestens einen Empfängerseite des AR-Systems werden in einer vorteilhaften Implementierung des erfindungsgemäßen Verfahrens zur Eingabe von Informationen in einer AR-Anwendung zumindest die folgenden Schritte ausgeführt:
4. Erfassung mindestens eines Bildes der Umgebung mithilfe der mindestens einen optischen Erfassungseinheit des AR-Systems
5. Übermittlung des mindestens einen erfassten Bildes an eine der zumindest einen optischen Erfassungseinheit zugeordnete Auswerteeinheit
6. Auswertung des mindestens einen jeweils erfassten Bildes im Hinblick auf die Position der Eingabevorrichtung
7. Auswertung des mindestens einen jeweils erfassten Bildes im Hinblick auf den Zustand der Leuchtelemente der Eingabevorrichtung
8. Erkennung des durch die Leuchtelemente der Eingabevorrichtung übermittelten Symbols
9. Dekodierung des Symbols mithilfe eine Dekodiereinheit
10. Verarbeitung der übertragenen Information

In einer besonders bevorzugten Ausführungsform des erfindungsgemäßen Verfahrens zur Eingabe von Informationen in einer AR-Anwendung und/oder einer VR-Anwendung ist eine erfindungsgemäße Eingabevorrichtung verwendet.

Ein erfindungsgemäßes Verfahren zur Erzeugung eines virtuellen Zeigers in einer AR-Umgebung verwendet eine Eingabevorrichtung sowie ein erfindungsgemäßes Verfahren zur Eingabe von Informationen zumindest im Umfang der Schritte 4 bis 6 und 10 in Verbindung mit dem Abstrahlen von Licht durch das mindestens eine Positionsleuchtelement der Eingabevorrichtung und/oder der Schritte 1 bis 3 des erfindungsgemäßen Verfahrens zur Eingabe von Informationen.

Die Darstellung eines virtuellen Objektes oder eines virtuellen Bildes in einem AR-System erfordert die Erzeugung eines virtuellen Bildes durch das AR-System, in der Regel durch das AR-Gerät, und die Projektion des virtuellen Bildes in das Blickfeld des Benutzers. Wird eine Kopplung von virtuellen und realen Inhalten angestrebt, so muss das reale Umfeld mithilfe der optischen Erfassungseinheit erfasst und das so erfasste Bild für die Erzeugung des virtuellen Bildes herangezogen werden.

Mithilfe des erfindungsgemäßen Verfahrens zur Erzeugung eines virtuellen Zeigers in einer AR-Umgebung wird ein virtueller Zeiger im AR-System erzeugt, der in einer weiteren Ausführungsform des Verfahrens zudem in das Blickfeld eines Benutzers des AR-Systems projiziert wird. Die Position bzw. die Trajektorie des virtuellen Zeigers ist dabei isomorph zur Position bzw. Trajektorie der Eingabevorrichtung bzw. des mindestens einen Positionsleuchtelemetes aus der Perspektive des Benutzers.

Unter der Isomorphie von Position bzw. Trajektorie des virtuellen Zeigers und der Eingabevorrichtung bzw. des mindestens einen Positionsleuchtelementes ist dabei aus dem Blickwinkel des Benutzers eine Übereinstimmung der Position des virtuellen Zeigers mit der Position der Eingabevorrichtung bzw. des mindestens einen Positionsleuchtelemetes der Eingabevorrichtung in der realen Umgebung zu verstehen, sodass der virtuelle Zeiger und die Eingabevorrichtung bzw. das mindestens eine Positionsleuchtelement in der AR-Umgebung aus der Perspektive des Benutzers etwa übereinanderliegen.

Die Übereinstimmung der Positionen von virtuellem Zeiger und realer Eingabevorrichtung bezieht sich dabei zumindest auf die Spitze einer ggf. in das Blickfeld des Benutzers projizierten graphischen Repräsentation des virtuellen Zeigers und das mindestens eine Positionsleuchtelement der Eingabevorrichtung.

Die Übereinstimmung der Positionen von virtuellem Zeiger und realer Eingabevorrichtung im Blickfeld eines Benutzers des AR-Systems wird durch eine Kalibration erreicht, bei der der Unterschied zwischen dem Sichtfeld des Benutzers und dem Erfassungsbereich der optischen Erfassungseinheit bestimmt wird. Im Zuge der Kalibration wird zumindest ein Korrekturparameter bestimmt, der den Unterschied zwischen dem Blickwinkel des Benutzers und dem der optischen Erfassungseinheit kompensiert.

Die Kalibration erfolgt in einer vorteilhaften Ausführungsform der Erfindung durch eine Projektion des mithilfe der optischen Erfassungseinheit erfassten Bildes in das Blickfeld des Benutzers, der mithilfe der Eingabevorrichtung und/oder von Eingabeeinrichtungen des AR-Gerätes eine Verschiebung und/oder Anpassung des projizierten Bildes derart vornimmt, dass das virtuelle, projizierte Bild möglichst exakt mit der realen Umgebung im Sichtfeld des Benutzers übereinstimmt.

In einer weiteren erfindungsgemäßen Ausführungsform wird zur Kalibration nur ein Teil des von der optischen Erfassungseinheit erfassten Bildes und/oder ein überarbeitetes von der optischen Erfassungseinheit erfasstes Bild in das Blickfeld des Benutzers projiziert. Insbesondere ist daran gedacht, das erfasste Bild auf markante Konturen zu reduzieren und nur diese in das Blickfeld des Benutzers zu projizieren, um die Kalibration zu erleichtern.

Die bei der Kalibration durchgeführte Manipulation des mithilfe der optischen Erfassungseinheit erfassten Bildes wird als mindestens ein Korrekturparameter, der in der Regel für jeden Benutzer individuell zu bestimmen ist, durch das AR-Gerät gespeichert und vor der Projektion des virtuellen Bildes in das Blickfeld des Benutzers auf das virtuelle Bild angewendet.

Die Manipulation des mithilfe der optischen Erfassungseinheit erfassten Bildes im Zuge der Kalibration umfasst dabei beispielsweise und in Abhängigkeit sowohl von dem Benutzer als auch dem verwendeten AR-Gerät eine Verschiebung des Bildes in beiden Richtungen der Bildebene und/oder eine Stauchung des Bildes und/oder eine Streckung des Bildes und/oder eine Rotation des Bildes.

In einer besonders bevorzugten Ausführungsform der Erfindung wird der mindestens eine Korrekturparameter durch eine einmalige Kalibration ermittelt.

Die Anwendung des mindestens einen Korrekturparameters kann in vorteilhaften Ausführungsformen der Erfindung entweder nach der Erfassung des Bildes mit der optischen Erfassungseinheit und vor der Auswertung des erfassten Bildes im Hinblick auf die Position der Eingabevorrichtung und ggf. den Zustand der Leuchtelemente oder nach der Erzeugung des virtuellen Bildes und vor der Projektion des virtuellen Bildes in das Blickfeld des Benutzers erfolgen.

Das erfindungsgemäße Verfahren zur Erzeugung eines virtuellen Zeigers umfasst somit zumindest die folgenden, nicht unbedingt in der Reihenfolge der Ausführung angegebenen, zusätzlichen Schritte:
11. Anwendung des mindestens einen Korrekturparameters auf das mithilfe der optischen Erfassungseinheit erfasste Bild,
   oder
12. Anwendung des mindestens einen Korrekturparameters auf das mithilfe des AR-Gerätes erzeugte, virtuelle Bild
   und
13. Erzeugung eines virtuellen Zeigers durch das AR-Gerät

In einer vorteilhaften Weiterbildung umfasst das Verfahren zur Erzeugung eines virtuellen Zeigers weiterhin zusätzlich die Darstellung einer graphischen Repräsentation des virtuellen Zeigers in der AR-Anwendung und damit die folgenden Schritte:
14. Erzeugung eines virtuellen Bildes aufweisend eine graphische Zeigerdarstellung an der Position des virtuellen Zeigers
15. Darstellung des virtuellen Zeigers in der AR-Umgebung durch Projektion des virtuellen Bildes in das Blickfeld des Benutzers.

In einer vorteilhaften Ausführungsform des Verfahrens zur Erzeugung eines virtuellen Zeigers in einer AR-Umgebung werden die benötigten Schritte in Echtzeit ausgeführt. Echtzeit bedeutet in diesem Kontext, dass die benötigten Schritte ausgeführt werden, ohne dass dies die Zeit, die von der Erfassung eines Bildes der Umgebung mithilfe der optischen Erfassungseinheit des AR-Systems bis zu der Erzeugung bzw. der Projektion des virtuellen Zeigers in das Blickfeld des Benutzers des AR-Systems benötigt wird, derart verlängert wird, dass eine für den Benutzer wahrnehmbare Verzögerung zwischen der Position der Eingabevorrichtung und des virtuellen Zeigers entsteht.

In einer weiteren vorteilhaften Ausführungsform des Verfahrens zur Erzeugung eines virtuellen Zeigers in einer AR-Umgebung werden zudem zusätzlich zumindest die Schritte 7 bis 9 des erfindungsgemäßen Verfahrens zur Eingabe von Informationen in ein AR-System in Echtzeit ausgeführt.

In einer besonders bevorzugten Ausführungsform des erfindungsgemäßen Verfahrens zur Erzeugung eines virtuellen Zeigers in einer AR-Anwendung und/oder einer VR-Anwendung ist eine erfindungsgemäße Eingabevorrichtung verwendet.

Das erfindungsgemäße Verfahren zur Erzeugung eines virtuellen Zeigers in einer AR-Anwendung ist durch zusätzlich virtuelle Inhalte, die in das virtuelle Bild integriert werden, erweiterbar. So ist insbesondere an die Darstellung einer virtuellen Benutzerschnittstelle in der AR-Umgebung gedacht, mit der der Benutzer mithilfe der Eingabevorrichtung interagieren kann.

Zusammengefasst gibt es für das erfindungsgemäße Verfahren zur Erzeugung eines virtuellen Zeigers vier verschiedene Bilder, die durch das Verfahren derart funktionell miteinander gekoppelt werden, dass einem Benutzer des AR-Systems eine nutzerperspektiven-getreue Bedienbarkeit einer virtuellen Benutzerschnittstelle in der AR-Umgebung mithilfe einer erfindungsgemäßen Eingabevorrichtung ermöglich ist.

Das erste Bild ist dabei das von der optischen Erfassungseinrichtung des AR-Systems erfassbare Bild der realen Umgebung. Das zweite Bild ist das virtuelle Bild, wie es basierend auf dem von der optischen Erfassungseinrichtung erfassten realen Umgebung durch das AR-System erzeugt wird. Das dritte Bild ist das projizierte Bild als graphische Repräsentation des virtuellen Bildes. Das vierte Bild ist die Kombination von projiziertem Bild mit der realen Umgebung aus der Perspektive des Benutzers des AR-Systems.

Das erfindungsgemäße Verfahren zur Erzeugung eines virtuellen Zeigers dient in seiner Grundfunktion somit der Erzeugung eines virtuellen Zeigers, beispielsweise in Form von Koordinaten, die eine exakte Position innerhalb des erfassten Bildes der realen Umgebung angeben. Dieser virtuelle Zeiger wird in einer bevorzugten Implementation des Verfahrens erfindungsgemäß zumindest herangezogen, um die virtuellen Elemente des virtuellen Bildes anzupassen und/oder virtuelle Elemente zu erzeugen und/oder eine graphische Repräsentation des virtuellen Zeigers für das projizierte Bild zu generieren.

In den nachfolgend beschriebenen Figuren sind verschiedene Ausführungsbeispiele und exemplarische Ausgestaltungen der Erfindung abgebildet. Es zeigen
- Figur 1:: eine Seitenansicht einer erfindungsgemäßen Eingabevorrichtung,
- Figur 2:: eine Darstellung eines AR-Systems umfassend eine AR-Brille und eine Eingabevorrichtung,
- Figur 3:: eine Darstellung eines erfindungsgemäßen AR-Systems mit einem Benutzer in einem Anwendungsbeispiel,
- Figur 4:: eine Illustration der Perspektive des Benutzers des AR-Systems in dem in Figur 4 gezeigten Anwendungsbeispiel,
- Figur 5:: eine Darstellung der Perspektive der optischen Erfassungseinheit des erfindungsgemäßen AR-Systems aus Figur 3 und Figur 4,
- Figur 6:: ein Blockschaltbild einer erfindungsgemäßen Eingabevorrichtung und eines als eine AR-Brille ausgebildeten AR-Gerätes,
- Figur 7:: ein Blockschaltbild eines erfindungsgemäßen AR-Systems,
- Figur 8:: eine Ansicht eines erfindungsgemäßen AR-Systems mit mehreren AR-Brillen und einem AR-Eingabegerät,
- Figur 9:: ein Ablaufdiagramm eines erfindungsgemäßen Verfahrens zur Eingabe von Informationen und
- Figur 10:: ein Ablaufdiagramm eines erfindungsgemäßen Verfahrens zur Erzeugung eines virtuellen Zeigers.

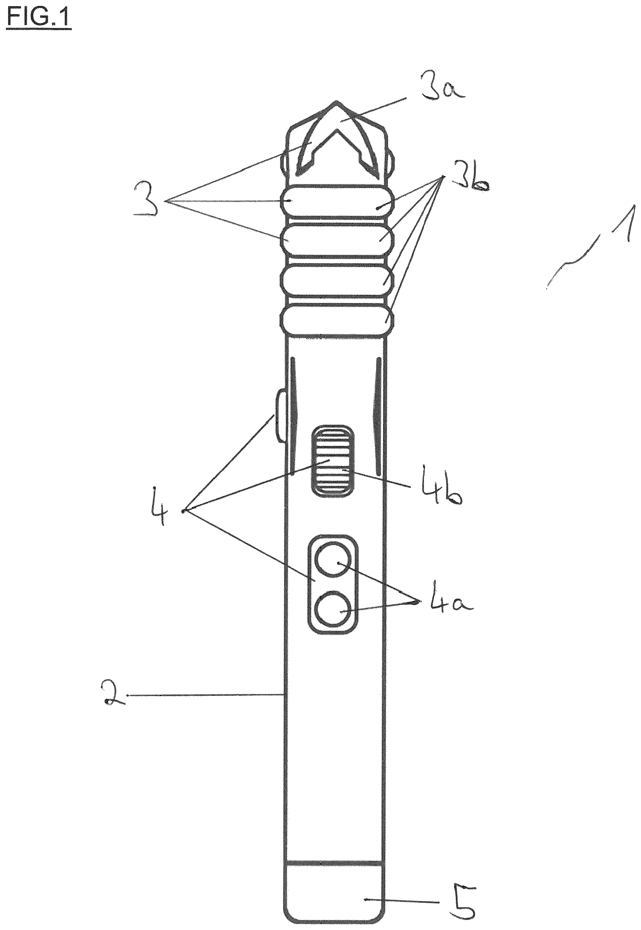

Figur 1 zeigt eine Seitenansicht einer beispielhaften erfindungsgemäßen Ausführungsform einer Eingabevorrichtung (1). Die Eingabevorrichtung (1) weist einen Körper (2) auf, der als ein stiftartig ausgebildetes Gehäuse realisiert ist. Im oberen Bereich der Eingabevorrichtung (1) sind fünf Leuchtelemente (3) angeordnet, durch die ein Leuchtbereich realisiert ist. Am oberen Ende der Eingabevorrichtung (1) ist durch ein von den anderen vier Leuchtelementen (3) abgegrenztes Leuchtelement (3) ein Positionsleuchtelement (3a) realisiert, durch das die Position des oberen Endes der Eingabevorrichtung (1) in einer Umgebung erfassbar ist. Alle Leuchtelemente (3) sind so angeordnet, dass diese aus einem möglichst weiten Raumwinkelbereich sichtbar sind. Im Falle der vier unteren Leuchtelemente (3) ist dies durch ringartig am Umfang der Eingabevorrichtung (1) umlaufende Abstrahlkörper realisiert. Die vier unteren der Leuchtelemente (3) realisieren zumindest einen Teil der optischen Datenübertragungsschnittstelle der Eingabevorrichtung (1) und sind als Datenübertragungsleuchtelemente (3b) ausgebildet.

Darüber hinaus weist die Eingabevorrichtung (1) mehrere Eingabeelemente (4) auf, die als drei Drucktaster (4a) und als ein Scrollrad (4b) realisiert sind.

Am unteren Ende der Eingabevorrichtung (1) ist eine Verschlusskappe (5) angeordnet, die eine Aufnahmeeinrichtung für einen Energiespeicher, beispielsweise ausgebildet als ein Akkumulator oder eine Batterie, verschließt.

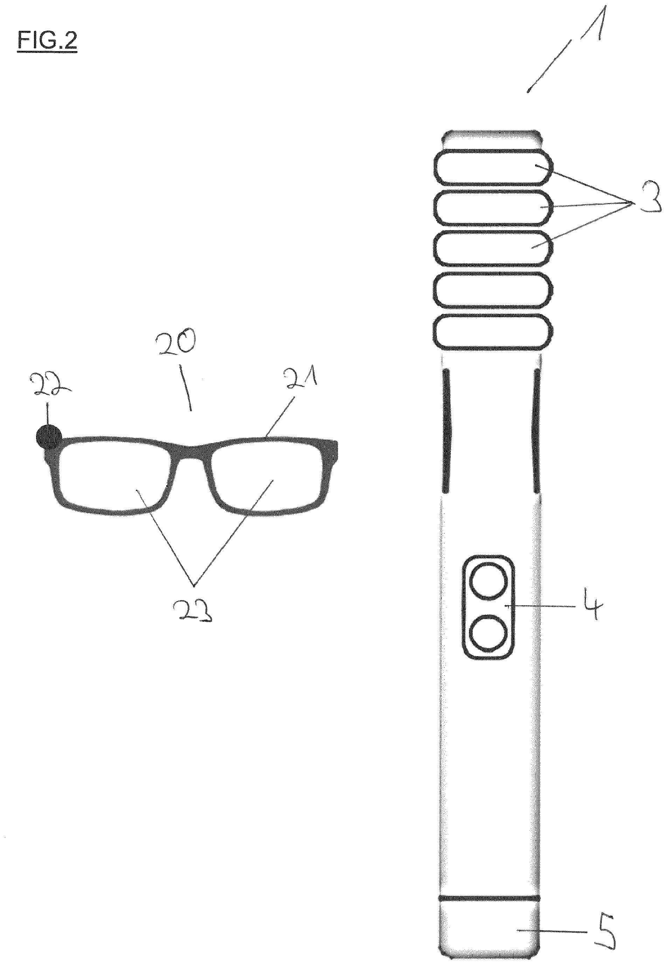

In Figur 2 ist ein AR-System aufweisend einer Eingabevorrichtung (1) und ein AR-Gerät (20), ausgebildet als eine AR-Brille, dargestellt.

Die Eingabevorrichtung (1) weist fünf übereinander angeordnete Leuchtelemente (3) sowie zwei als Drucktaster (4a) ausgebildete Eingabeelemente (4) auf.

Die Leuchtelemente (3) sind in der dargestellten erfindungsgemäßen Ausführungsform einer Eingabevorrichtung (1) für AR-Anwendungen gleichartig ausgeführt und etwa äquidistant angeordnet.

Das als AR-Brille ausgebildete AR-Gerät (20) weist einen als ein Brillenrahmen ausgebildeten Träger (21) auf, an dem eine optische Erfassungseinheit (22) und zwei Brillengläser (23) montiert sind.

Im Bereich des Trägers (21) sind weiterhin zumindest eine nicht dargestellte Auswerteeinheit und eine Projektionseinrichtung angeordnet.

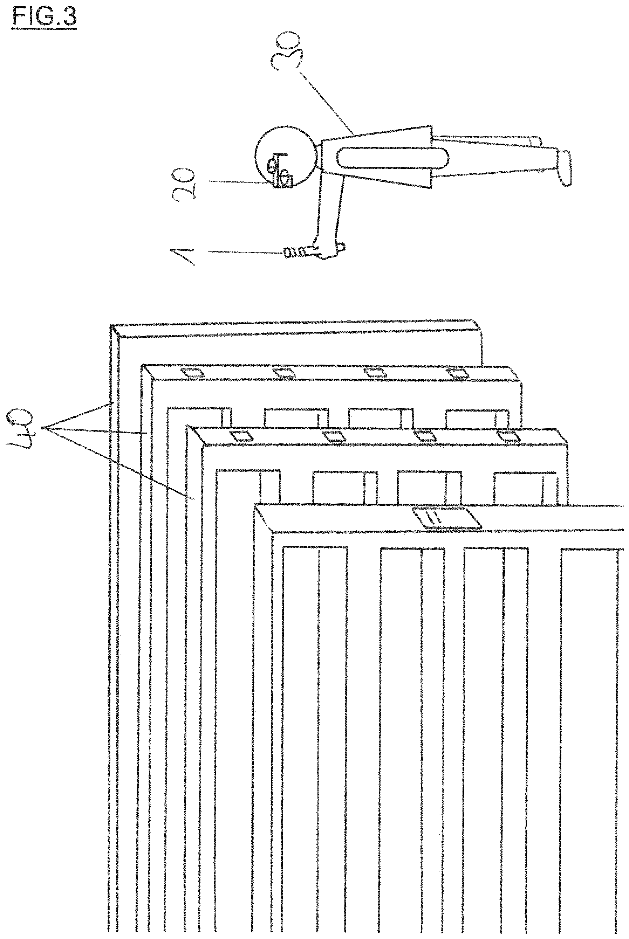

Figur 3 zeigt ein erfindungsgemäßes AR-System aufweisend eine Eingabevorrichtung (1) und ein als eine AR-Brille ausgebildetes AR-Gerät (20) in einem Anwendungsbeispiel. Ein Benutzer (30) hält die Eingabevorrichtung (1) in seiner rechten Hand und trägt das AR-Gerät (20) an seinem Kopf. Vor dem Benutzer (30) befinden sich vier Regaleinheiten (40) eines Lagers.

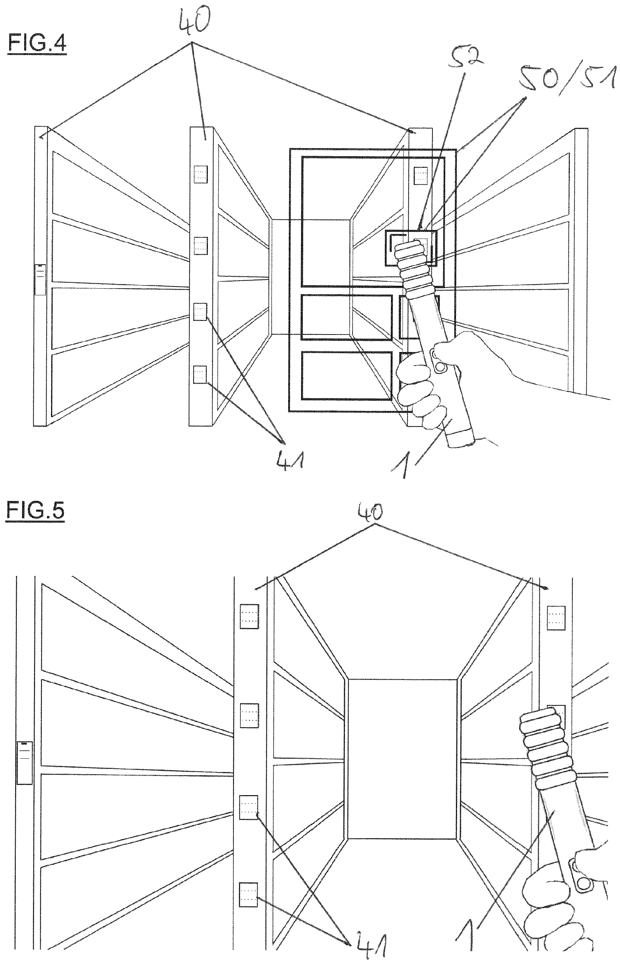

In Figur 4 ist das Sichtfeld des Benutzers in dem Anwendungsbeispiel aus Figur 3 in seiner Perspektive dargestellt. Die auch durch die Regaleinheiten (40) des Lagers gegebene reale Umgebung des Benutzers (30) ist durch virtuelle Elemente (50) erweitert, die mithilfe des AR-Gerätes (20) in das Blickfeld des Benutzers (30) projiziert werden.

Die virtuellen Elemente (50) sind in der dargestellten beispielhaften Ausführungsform eines AR-Systems an reale Objekte (41) gekoppelt. Die realen Objekte (41) sind in dem Beispiel als optisch auslesbare Kodierungselemente an den Fronten der Regaleinheiten (40) implementiert.

Eine aus dem optisch auslesbaren, beispielsweise als ein Barcode oder ein QR-Code realisierten Kodierungselement auslesbare Information wird verwendet, um eine virtuelle graphische Benutzerschnittstelle (51)- im Folgenden GUI (Graphical User Interface) - in Form von mindestens einem virtuellen Interaktionselement (52) mithilfe des AR-Gerätes (20) zu erzeugen oder zu adaptieren.

Mithilfe der erfindungsgemäßen Eingabevorrichtung (1) ist es dem Benutzer (30) des AR-Systems möglich, mit dem mindestens einen virtuellen Interaktionselement (52) des GUI (51) zu interagieren.

Die Interaktion zwischen Benutzer (30) und GUI (51) mithilfe der Eingabevorrichtung (1) erfolgt dabei ähnlich zur Verwendung einer Computermaus mit einem PC, wobei ein ggf. erzeugter virtueller Zeiger an die Position des Eingabegerätes (1) in der erweiterten Wirklichkeit des AR-Systems aus der Perspektive des Benutzers (30) gekoppelt ist.

Figur 5 zeigt die reale Umgebung des Benutzers (30) im Erfassungsbereich der optischen Erfassungseinheit (22). Das mithilfe der optischen Erfassungseinheit (22) erfassbare Bild weist in Bezug auf die Größe des erfassbaren Ausschnittes sowie die Perspektive Abweichungen von dem durch den Benutzer (30) erfassbaren Bild auf.

In dem dargestellten Beispiel ist der Erfassungsbereich der optischen Erfassungseinheit (22) kleiner, als das durch den Benutzer (30) wahrnehmbare Sichtfeld und die Perspektive bzw. der Blickwinkel ist leicht verschoben. Jedoch kann der Erfassungsbereich der optischen Erfassungseinheit (22) je nach Ausführungsform auch größer sein als das durch den Benutzer (30) wahrnehmbare Sichtfeld.

Diese Abweichungen werden erfindungsgemäß berücksichtigt, um die reale Umgebung des Benutzers (30) mithilfe des AR-Gerätes (20) durch auf die Perspektive des Benutzers (30) abgestimmte virtuelle Elemente (50) zu einer erweiterten Realität zu ergänzen.

Die Berücksichtigung der Abweichungen des mithilfe der optischen Erfassungseinheit (22) erfassbaren Bildes von dem durch einen Benutzer (30) wahrnehmbaren Bild erfolgt erfindungsgemäß durch eine bevorzugt einmalig vorgenommene Kalibration des AR-Gerätes (20), wobei die die Abweichung beschreibenden Parameter erfasst und gespeichert werden, sodass die Parameter bei der Verarbeitung der mithilfe der optischen Erfassungseinheit (22) erfassten Bilder und der Erzeugung sowie Projektion virtueller Elemente (50) in den Sichtbereich des Benutzers (30) verwendbar sind.

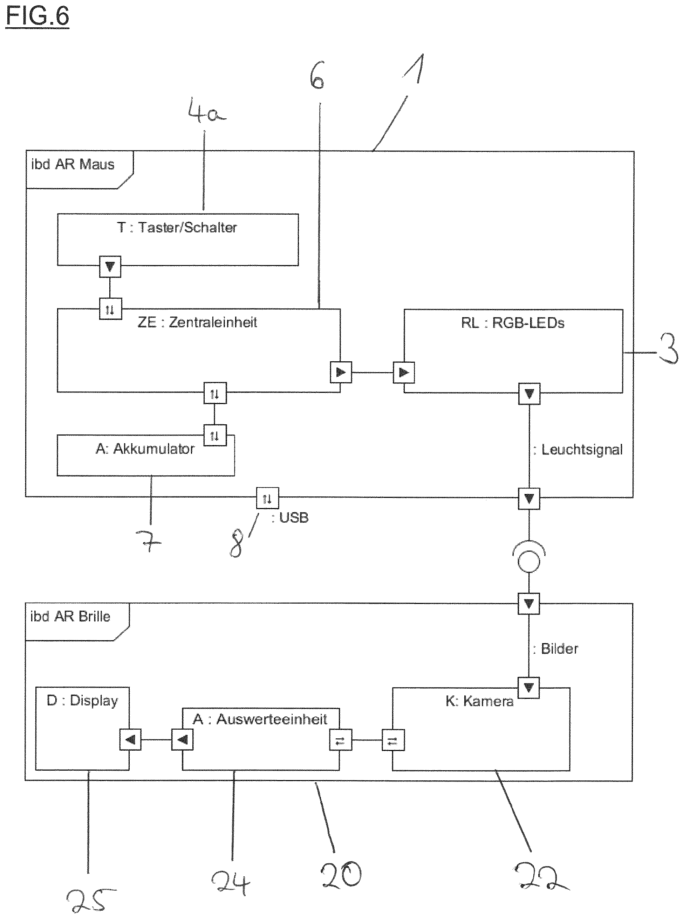

Figur 6 zeigt ein Blockschaltbild einer beispielhaften Ausführungsform einer erfindungsgemäßen Eingabevorrichtung (1) sowie ein Blockschaltbild eines beispielhaften AR-Gerätes (20). Die Eingabevorrichtung (1) weist Leuchtelemente (3) auf, deren Leuchtmittel als RGB-LEDs realisiert sind. Darüber hinaus weist die Eingabevorrichtung (1) eine Zentraleinheit (6), die beispielsweise als ein Mikrocontroller ausgebildet ist, einen Taster (4a) und einen Akkumulator (7) auf. Weiterhin verfügt die Eingabevorrichtung über eine als ein USB-Anschluss ausgebildete Schnittstelle (8).

Das AR-Gerät (20) weist eine Auswerteeinheit (24), eine als ein Display ausgebildete Projektionseinrichtung (25) sowie eine als eine Kamera ausgebildete optische Erfassungseinheit (22) auf.

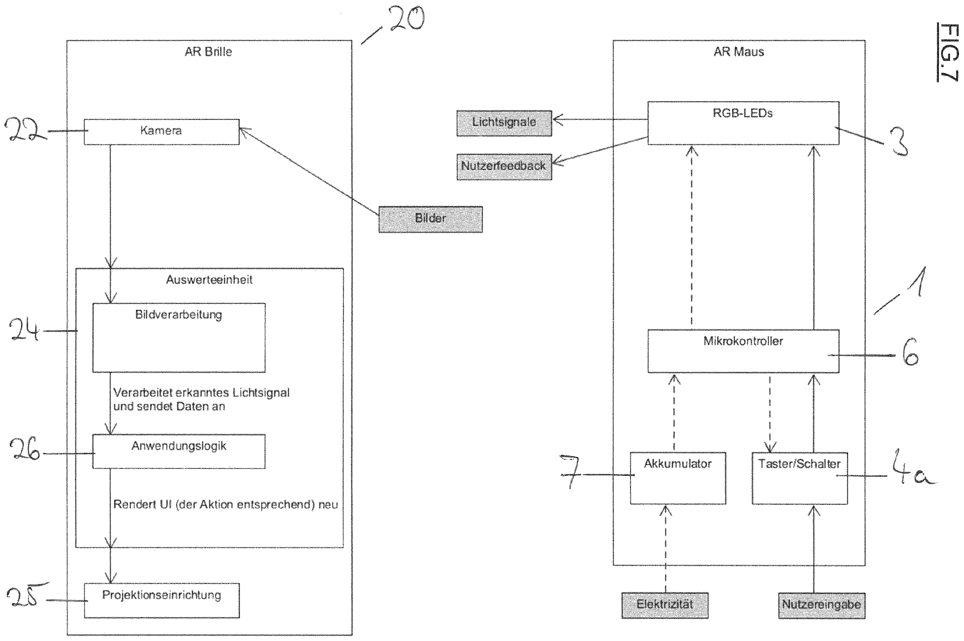

Figur 7 zeigt ein Systemdiagramm eines erfindungsgemäßen AR-Systems. Die als eine AR-Maus ausgebildete Eingabevorrichtung (1) weist eine als ein Mikrocontroller ausgebildete Zentraleinheit (6) sowie einen Akkumulator (7) und einen Taster (4a) auf. Mithilfe des Mikrocontrollers sind die durch RGB-LEDs realisierten Leuchtelemente (3) der Eingabevorrichtung (1) ansteuerbar, sodass Leuchtsignale emittierbar sind, die die Bestimmung der Position der Eingabevorrichtung (1) und ggf. die Übertragung von zusätzlichen Informationen, beispielsweise gegeben durch ein Nutzerfeedback, durch eine Modulation des emittierten Lichtes ermöglichen.

Eine Kodiereinheit zur Kodierung von Informationen in Form von binären Daten in Symbole ist als ein Teil der Zentraleinheit (6) ausgebildet.

Die mithilfe der als eine Kamera ausgebildeten optischen Erfassungseinheit (22) des AR-Gerätes (20) erfassten Bilder zeigen die Eingabevorrichtung (1) und die Leuchtelemente (3) der Eingabevorrichtung (1), sofern sich diese im Erfassungsbereich befinden.

Die erfassten Bilder sind von der Kamera an die Auswerteeinheit (24) des AR-Gerätes (20) übertragbar. Mithilfe der Auswerteeinheit (24) ist eine Bildverarbeitung ausführbar, wobei erkannte Leuchtsignale einer Eingabevorrichtung (1) dekodiert und an eine Anwendungslogik (26) übergeben werden.

In Abhängigkeit der mithilfe der Anwendungslogik (26) bestimmten Folgeaktion(en) wird mithilfe der Auswerteeinheit (24) zumindest ein neues virtuelles Bild erzeugt und an die Projektionseinrichtung (25) übergeben, um das erzeugte virtuelle Bild in das Blickfeld des Benutzers (30) zu projizieren.

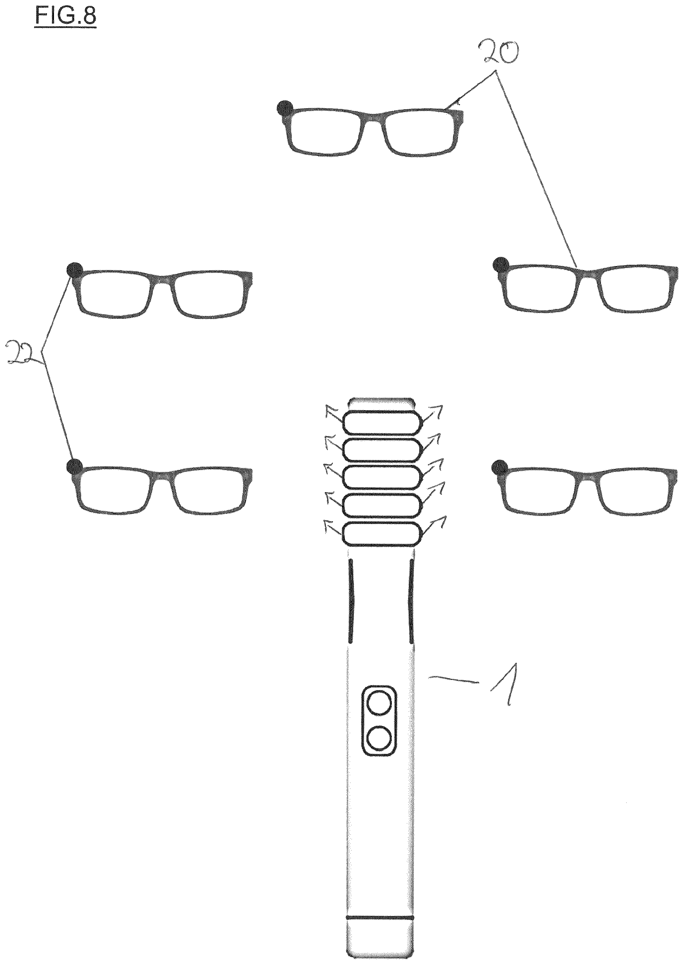

In Figur 8 ist ein erfindungsgemäßes AR-System mit einer Eingabevorrichtung (1) und mehreren AR-Geräten (20) illustriert.

Die mithilfe einer Eingabevorrichtung (1) emittierten Leuchtsignale sind zeitgleich durch mehrere AR-Geräte (20) jeweils mithilfe einer individuellen optischen Erfassungseinheit (22) erfassbar und jeweils dekodierbar.

So sind Informationen an mehrere Benutzer (30) eines AR-Systems gleichzeitig übermittelbar und dadurch virtuelle Inhalte teilbar oder synchronisierbar.

Als eine beispielhafte erfindungsgemäße Implementierung eines Mehrbenutzer-AR-Systems ist an das Teilen eines Links gedacht, wobei jeder Benutzer (30) des Mehrbenutzer-AR-Systems durch das Öffnen des Links auf den gleichen Inhalt, beispielsweise eine Präsentation oder ein virtuelles Modell, an einem freigegebenen Speicherort, etwa auf einem Server, zugreifen kann. Allgemein lässt sich die Funktionalität der optischen Übermittlung von Daten bzw. Informationen mithilfe einer erfindungsgemäßen Eingabevorrichtung (1) an mehrere AR-Benutzer (30) als lokales Teilen beschreiben, wobei der Adressatenkreis durch die Erfassbarkeit des Leuchtsignals durch die jeweils zugeordnete optische Erfassungseinheit (22) des AR-Gerätes (20) eines Benutzers (30) und einhergehend der Empfang der versendeten Daten begrenzt ist.

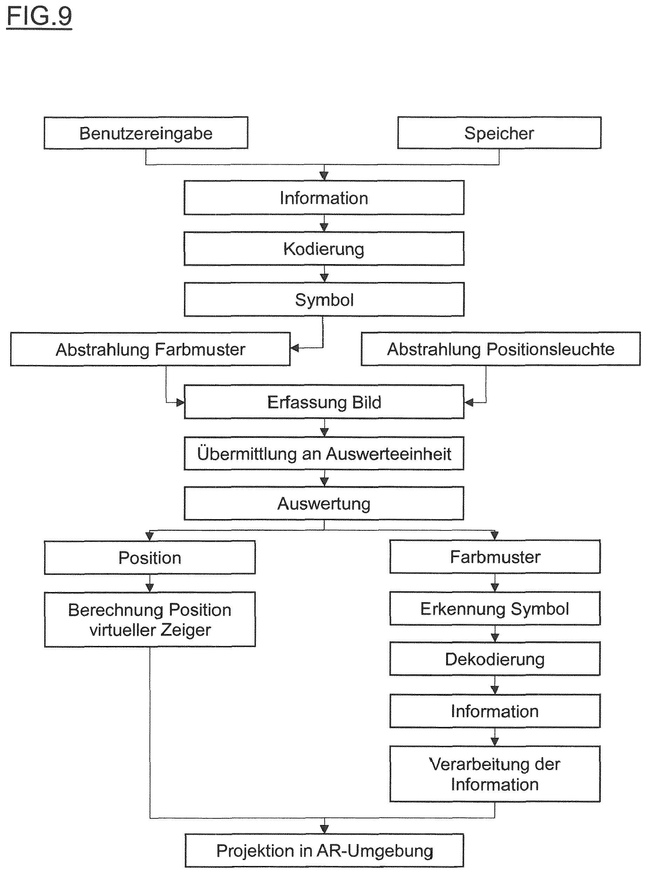

Figur 9 zeigt ein beispielhaftes Prozessdiagramm eines erfindungsgemäßen Verfahrens zur Eingabe von Informationen in einer AR-Anwendung.

In einem ersten Schritt der beispielhaften Implementierung eines erfindungsgemäßen Verfahrens zur Eingabe von Informationen in einer AR-Anwendung wird eine Information entweder durch eine Benutzereingabe mithilfe einer erfindungsgemäßen Eingabevorrichtung (1), wie beispielsweise einen Tastendruck, erzeugt oder es wird eine Information aus einem Speicher der Eingabevorrichtung (1) geladen.

In einem nächsten Schritt wird die Information mithilfe der Kodiereinheit entsprechend einer Kodiervorschrift kodiert, sodass zumindest ein Symbol erzeugt wird, das mithilfe der der Datenübertragungsschnittstelle zugeordneten Leuchtelemente (3) einer erfindungsgemäßen Eingabevorrichtung (1) als ein Farbmuster bzw. eine Farbmusterfolge abstrahlbar ist.

Zeitgleich wird mit zumindest einem als ein Positionsleuchtelement (3a) ausgebildeten Leuchtelement (3) Licht emittiert, das der Lokalisierbarkeit der Eingabevorrichtung (1) dient. Das mindestens eine Positionsleuchtelement (3a) kann auch in die Datenübertragung eingebunden sein und entsprechend moduliertes Licht übertragen.

In einem zeitlich parallel erfolgenden Schritt wird mithilfe der optischen Erfassungseinheit (22) eines AR-Gerätes (20) zumindest ein Bild erfasst. Das mindestens eine erfasste Bild wird in einem folgenden Schritt an die Auswerteeinheit (24) des AR-Gerätes (20) übermittelt und in einem anschließenden Schritt ausgewertet. Aufgrund des erhöhten Fehlerrisikos im Falle der Auswertung nur eines Bildes ist es empfehlenswert mehrere Bilder zu erfassen und der im Folgenden beschriebenen Auswertung zu unterziehen, um einen Rückschluss auf die übertragenen Informationen zu schließen. Die Framerate der optischen Erfassungseinheit (22) muss dazu in Relation zur Symboldauer bzw. Sendefrequenz entsprechend höher sein.

Die Auswertung des Bildes erfolgt dabei im Hinblick auf die Position der Eingabevorrichtung (1) und das durch die Zustände der Leuchtelemente (3) gegebene Farbmuster. Aus der Position der Eingabevorrichtung (1) bzw. des mindestens einen Positionsleuchtelementes (3a) wird beispielsweise die Position eines virtuellen Zeigers berechnet, die auch für eine Interaktion des Benutzers (30) des AR-Systems mit dem virtuellen GUI (51) von Bedeutung ist.

Das erkannte Farbmuster der Leuchtelemente (3) der Eingabevorrichtung (1) wird in ein Symbol gewandelt. Durch eine anschließende Dekodierung mithilfe einer Dekodiereinheit wird die von der Eingabevorrichtung (1) versendete Information ausgelesen und in einem folgenden Schritt verarbeitet.

Basierend auf den erfassten Informationen von der Eingabevorrichtung (1) wird in den nächsten, nicht zwangsläufig in dem erfindungsgemäßen Verfahren zur Eingabe von Informationen in einer AR-Anwendung enthaltenen Schritten ein virtuelles Bild erzeugt und mithilfe einer Projektionseinrichtung (25) in das Sichtfeld des Benutzers (30) projiziert.

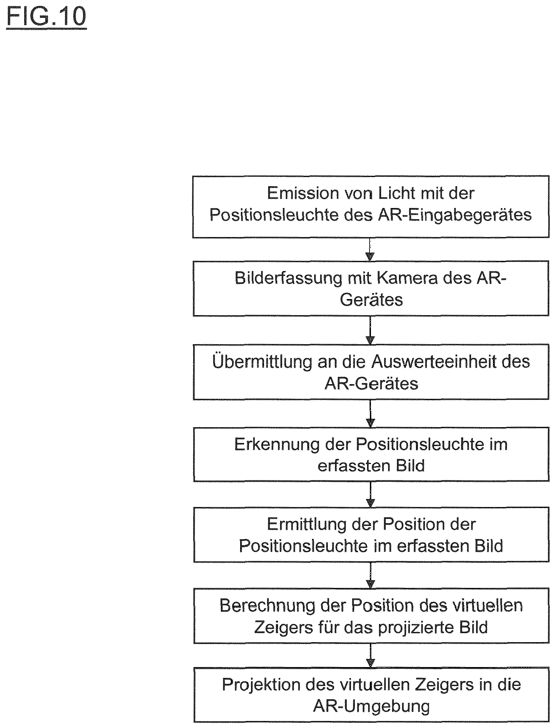

In Figur 10 ist ein Prozessdiagramm eines erfindungsgemäßen Verfahrens zur Erzeugung eines virtuellen Zeigers in einer AR-Anwendung veranschaulicht.

Das illustrierte Beispiel eines erfindungsgemäßen Verfahrens zur Erzeugung eines virtuellen Zeigers in einer AR-Anwendung startet in einem Schritt mit der Emission von Licht mithilfe des mindestens einen als ein Positionsleuchtelement (3a) ausgebildeten Leuchtelementes (3) einer Eingabevorrichtung (1).

Zeitgleich erfolgt die Erfassung zumindest eines Bildes mithilfe der optischen Erfassungseinheit (22) eines AR-Gerätes (20). Das mindestens eine erfasste Bild wird anschließend an die Auswerteeinheit des AR-Gerätes (20) übermittelt und bezüglich der Position des mindestens einen Positionsleuchtelementes (3a) der Eingabevorrichtung (1) ausgewertet.

Anhand der Position des mindestens einen Positionsleuchtelementes (3a) in dem mindestens einen erfassten Bild wird in einem folgenden Schritt die Position des virtuellen Zeigers in Relation zu den virtuellen Elementen (50), insbesondere in Relation zu den virtuellen Interaktionselementen (50) der GUI (51) berechnet. Diese Berechnung erfolgt dabei unter Berücksichtigung des mindestens einen durch die Kalibration des AR-Gerätes (20) für den Benutzer (30) generierten Parameters zur Kompensation der unterschiedlichen Erfassungsbereiche und der unterschiedlichen Perspektiven von Benutzer (30) und optischer Erfassungseinheit (22).

In den folgenden Schritten wird das virtuelle Bild, das gemäß der dargestellten vorteilhaften Ausführungsform des Verfahrens eine graphische Darstellung des virtuellen Zeigers enthält, erzeugt und mithilfe der Projektionseinrichtung (25) in das Blickfeld des Benutzers (30) projiziert.

Als graphische Zeigerdarstellung ist dabei insbesondere an die Verwendung eines Punktes, eines Kreuzes oder eines Pfeiles gedacht. Für den Fall, dass keine graphische Darstellung des virtuellen Zeigers in der AR-Umgebung erfolgt, kann ein geeignetes Feedback für den Benutzer durch Veränderungen der graphischen Darstellung der virtuellen Interaktionselemente (50) realisiert sein. Beispielsweise kann ein virtuelles Interaktionselement (50) in seiner Größe, Farbe und/oder Form angepasst werden, sofern der virtuelle Zeiger in den virtuellen Aktionsbereich des virtuellen Interaktionselementes (50) gelangt.

## Patentansprüche

1. Eingabevorrichtung (1) zur Eingabe von Daten in einer Augmented-Reality- und/oder in einer Virtual-Reality-Anwendung, die Eingabevorrichtung (1) aufweisend mindestens ein Eingabeelement (4) zur Erfassung einer Benutzereingabe, sowie mindestens zwei Leuchtelemente (3), wobei mithilfe der Leuchtelemente (3) mindestens ein Positionsleuchtelement (3a) und eine optische Datenübertragungsschnittstelle realisiert sind, **dadurch gekennzeichnet, dass** mit jedem der Leuchtelemente (3) unabhängig voneinander verschiedenfarbiges Licht emittierbar ist.

2. Eingabevorrichtung (1) nach Anspruch 1, **dadurch gekennzeichnet, dass** diese eine Kodiereinheit aufweist, mit der digitale Daten kodierbar sind, sodass die digitalen Daten mithilfe der der optischen Datenübertragungsschnittstelle zugeordneten Leuchtelemente (3) in Form von moduliertem Licht abstrahlbar bzw. versendbar sind, wobei durch jedes der der Datenübertragungsschnittstelle zugeordneten Leuchtelement (3) ein Datenübertragungskanal realisiert ist.

3. Eingabevorrichtung (1) nach Anspruch 1, **dadurch gekennzeichnet, dass** das mit jedem der Leuchtelemente (3) emittierbare verschiedenfarbige Licht zumindest die Farben Rot, Grün und Blau umfasst.

4. Eingabevorrichtung (1) nach mindestens einem der vorstehenden Ansprüche, **dadurch gekennzeichnet, dass** diese mindestens drei Leuchtelemente (3) aufweist.

5. Eingabevorrichtung (1) nach mindestens einem der vorstehenden Ansprüche, **dadurch gekennzeichnet, dass** diese mindestens ein Positionsleuchtelement (3a) und mindestens zwei Datenübertragungsleuchtelemente (3b) aufweist.

6. Eingabevorrichtung (1) nach mindestens einem der vorstehenden Ansprüche, **dadurch gekennzeichnet, dass** diese fünf Leuchtelemente (3) aufweist, von denen durch zumindest ein Leuchtelement (3) ein Positionsleuchtelement (3a) realisiert ist und durch zumindest vier Leuchtelemente (3) eine optische Datenübertragungsschnittstelle realisiert ist.

7. Eingabevorrichtung (1) nach mindestens einem der vorstehenden Ansprüche, **dadurch gekennzeichnet, dass** neben den Datenübertragungsleuchtelementen (3b) auch das mindestens eine Positionsleuchtelement (3a) der Datenübertragungsschnittstelle zugeordnet ist, sodass im Falle einer Datenübertragung auch durch jedes der Positionsleuchtelemente (3a) ein Datenübertragungskanal realisiert ist.

8. Verfahren zur Eingabe von Informationen in einer AR-Anwendung und/oder in einer Virtual-Reality-Anwendung unter der Verwendung zumindest einer Eingabevorrichtung (1), **dadurch gekennzeichnet, dass** mithilfe der Eingabevorrichtung (1) eine Information erzeugt oder aus einem Speicher geladen wird und dass mithilfe der Kodiereinheit der Eingabevorrichtung (1) die Information in Form einer Bitfolge entsprechend einer Kodiervorschrift kodiert wird und dass die kodierte Information mithilfe der der optischen Datenübertragungsschnittstelle der Eingabevorrichtung (1) zugeordneten Leuchtelemente (3) in Form eines Leuchtmusters versendet wird, wobei durch die Datenübertragungsschnittstelle zumindest zwei Datenübertragungskanäle realisiert sind, und dass mindestens ein AR-Gerät (20) das Leuchtmuster mithilfe mindestens einer optischen Erfassungseinheit (22) erfasst und dass die mithilfe der mindestens einen optischen Erfassungseinheit (22) erfassten Daten an eine Auswerteeinheit (24) übertragen werden und dass das mindestens eine AR-Gerät (20) mithilfe der Auswerteeinheit (24) die Leuchtfarbe sowie den Zustand (Ein/Aus) jedes Leuchtelements (3) der Datenübertragungsschnittstelle der Eingabevorrichtung (1) erfasst und dass das erfasste Leuchtmuster mithilfe der Auswerteeinheit (24) mittels einer Dekodiervorschrift zu einer Bitfolge dekodiert wird.

9. Verfahren nach Anspruch 8, **dadurch gekennzeichnet, dass** die Eingabevorrichtung (1) nach zumindest einem der Ansprüche 1 bis 7 realisiert ist.

10. Verfahren zum Senden von Daten unter der Verwendung zumindest einer Eingabevorrichtung (1) nach mindestens einem der Ansprüche 1 bis 7, **dadurch gekennzeichnet, dass** mithilfe der Eingabevorrichtung (1) eine Information erzeugt oder aus einem Speicher geladen wird und dass mithilfe der Kodiereinheit der Eingabevorrichtung (1) eine Information in Form einer Bitfolge entsprechend einer Kodiervorschrift kodiert wird und dass die kodierte Information mithilfe der Leuchtelemente (3) der optischen Datenübertragungsschnittstelle der Eingabevorrichtung (1) in Form eines Leuchtmusters gesendet wird.

11. Verfahren zur Erzeugung eines virtuellen Zeigers in einer Augmented-Reality-Umgebung und/oder in einer Virtual-Reality-Umgebung unter der Verwendung zumindest einer Eingabevorrichtung (1), die Eingabevorrichtung aufweisend mindestens ein Positionsleuchtelement (3a), **dadurch gekennzeichnet, dass** die Erzeugung des virtuellen Zeigers in der Augmented-Reality-Umgebung und/oder in der Virtual-Reality-Umgebung basierend auf der Erfassung der Position der Eingabevorrichtung (1) im Raum in Verbindung mit dem Abstrahlen von Licht mit dem mindestens einen Positionsleuchtelement (3a) der Eingabevorrichtung (1) realisiert ist, wobei die Erfassung mindestens eines Bildes der Umgebung mithilfe mindestens einer optischen Erfassungseinheit (22) des AR-Systems vorgenommen wird und eine Übermittlung des mindestens einen erfassten Bildes an eine der zumindest einen optischen Erfassungseinheit (22) zugeordnete Auswerteeinheit (24) vorgenommen wird und eine Auswertung des mindestens einen jeweils erfassten Bildes im Hinblick auf die Position der Eingabevorrichtung (1) vorgenommen wird und eine Verarbeitung der übertragenen Information im Sinne der Position der Eingabevorrichtung (1) vorgenommen wird, und dass durch den virtuellen Zeiger bzw. dessen Position und / oder Trajektorie eine isomorphe Abbildung mindestens eines Positionsleuchtelementes (3a) der Eingabevorrichtung (1) bzw. der Position mindestens eines Positionsleuchtelementes (3a) und / oder dessen Trajektorie realisiert ist, wobei die Isomorphie zwischen virtuellem Zeiger und dem mindestens einen Positionsleuchtelement (3a) durch die Anwendung mindestens eines Korrekturparameters erfolgt, der durch eine Kalibration des AR-Systems erzeugt wird.

12. Verfahren nach Anspruch 11, **dadurch gekennzeichnet, dass** die Erzeugung des virtuellen Zeigers in Echtzeit erfolgt.

13. Verfahren nach mindestens einem der Ansprüche 11 bis 12, **dadurch gekennzeichnet, dass** der erzeugte virtuelle Zeiger zur Interaktion mit einem virtuellen GUI verwendet wird.

14. Verfahren nach mindestens einem der Ansprüche 11 bis 13, **dadurch gekennzeichnet, dass** der erzeugte virtuelle Zeiger durch eine graphische Repräsentation in der AR-Umgebung dargestellt wird.

15. Verfahren nach mindestens einem der Ansprüche 11 bis 14, **dadurch gekennzeichnet, dass** die Eingabevorrichtung (1) nach zumindest einem der Ansprüche 1 bis 7 realisiert ist.
